# EUROPÄISCHE PATENTSCHRIFT

(11) **EP 2 336 224 B1**
(45) Veröffentlichungstag und Bekanntmachung des Hinweises auf die Patenterteilung: **16.03.2016**
(21) Anmeldenummer: 10194981.6
(22) Anmeldetag: 14.12.2010
(51) Int. Cl.: C08J 9/00, C08J 9/12, C08J 9/16, C08J 9/18, C08L 23/00

(54) **Verfahren zur Herstellung von Polyolefin-Schaumstoffpartikeln**
Process for producing polyolefin foam particles
Procédé de fabrication de particules en mousse de polyoléfine

(30) Priorität: 17.12.2009 EP 09179561
(43) Veröffentlichungstag der Anmeldung: 22.06.2011
(73) Patentinhaber: BASF SE, 67056 Ludwigshafen (DE)
(72) Erfinder: Mair, Gunther, 68163 Mannheim (DE); Noethe, Armin, 67346 Speyer (DE); Meier, Egon, 67454 Haßloch (DE); Keppeler, Uwe, 67126 Hochdorf-Assenheim (DE)

(56) Entgegenhaltungen:
- DE-A1- 19 737 002
- US-A- 4 704 239
- US-A- 5 561 170
- DATABASE CA [Online] CHEMICAL ABSTRACTS SERVICE, COLUMBUS, OHIO, US; 1. Oktober 2009 (2009-10-01), YOSHIDA, TORU: "Propylene polymer foam particles, their manufacture with sticking and flattening prevention, and foam moldings comprising them", XP002628904, gefunden im STN Database accession no. 2009:1198180 -& JP 2009 221451 A (KANEKA CORP) 1. Oktober 2009 (2009-10-01)

## Beschreibung

Die vorliegende Erfindung betrifft ein Verfahren zur Herstellung von expandierten Partikeln enthaltend mindestens ein Polyolefin, mindestens umfassend die folgenden Schritte (A) Herstellen einer Suspension enthaltend ein Granulat enthaltend mindestens ein Polyolefin, in Wasser, (B) Imprägnieren des in der Suspension aus Schritt (A) enthaltenen Granulates mit mindestens einem Treibmittel, um ein mit Treibmittel beladenes Granulat in Suspension zu erhalten, und (C) Entspannen der in Schritt (B) erhaltenen Suspension, um expandierte Partikel zu erhalten, wobei das Phasenverhältnis von in Schritt (A) eingesetztem Granulat zu Wasser > 0,5 beträgt und als Treibmittel in Schritt (B) Stickstoff eingesetzt wird, wobei die Schüttdichte der expandierten Partikel 80 bis 300 g/l beträgt, expandierte Partikel, herstellbar durch das Verfahren, einen Schaumstoff, enthaltend diese expandierten Partikel, sowie Formteile, herstellbar aus diesen expandierten Partikeln.

Die wirtschaftliche Produktion von Partikelschaumstoffen nach dem Imprägnierverfahren (Autoklav-Verfahren) gewinnt zunehmend an Bedeutung. Die Größe entsprechender Produktionsanlagen liegt bei ca. 300 - 1000 kg Feststoff pro Ansatz, bei einem üblichen Füllgrad von 80%. Bei einer gegebenen Produktionsanlage lässt sich die spezifische Produktleistung, d.h. die pro Raum und Zeit in einem Reaktor gebildete Produktmenge, nur durch Verkürzung der Zykluszeit oder durch Erhöhung der Füllmenge an Feststoff bzw. durch Erhöhung des Füllgrades, erhöhen. Bei unverändertem Füllgrad bedeutet die Erhöhung der Füllmenge des Feststoffes eine Er-höhung des Phasenverhältnisses P von Feststoff-Phase zu Flüssigphase.

Verfahren zur Herstellung von entsprechenden Schaumpartikeln sind aus dem Stand der Technik bereits bekannt.

Bei der Herstellung von expandierten Partikeln durch das Imprägnierverfahren besteht im Stand der Technik die Problematik, dass bei hohen Schüttdichten, beispielsweise oberhalb 80 g/l, die Korngrößenverteilung deutlich breiter wird. Dies führt zu schlechteren Ausbeuten, da ein großer Anteil von Partikeln, die außerhalb der gewollten Partikelgröße liegen, abgesiebt werden müssen. Partikel mit zu unterschiedlichen Partikelgrößen würden sich im Fertigungsprozess zumindest teilweise entmischen. Des Weiteren besteht die Gefahr, dass aus expandierten Polymer-Partikeln mit einer zu breiten Korngrößenverteilung hergestellte Formteile erhöhte Dichteschwankungen aufweisen.

EP 0 113 903 offenbart ein Verfahren zur Herstellung von expandierbaren Polymerpartikeln, wobei entsprechende Polymerpartikel in einem entsprechenden Dispersionsmittel dispergiert werden und mit einem Treibmittel, beispielsweise Kohlenstoffdioxid oder Kohlenstoffdioxid mit einem flüchtigen Treibmittel imprägniert werden, und Überführen dieser imprägnierten Partikel in eine Atmosphäre, die einen Druck aufweist, die geringer ist als der Druck im Imprägnierschritt, wobei das Verhältnis von aufzuschäumenden Polymerpartikeln zu Dispergiermittel 0,22 bis 0,33 beträgt.

US 5,077,322 offenbart ein Verfahren zur Herstellung von Schäumen, die auf einem Olefin-Copolymer basieren. Dazu werden Copolymere von Ethylen und Propylen mit einem entsprechenden Treibmittel imprägniert und durch Einbringen in einen Raum mit geringerem Druck aufgeschäumt, wobei das Verhältnis von aufzuschäumenden Partikeln zu Dispersionsmittel beispielsweise 0,44 beträgt.

US 4,689,351 offenbart ein Verfahren zur Herstellung von Schaumpartikeln aus Propylen-Copolymerharzen, wobei Propylen-Ethylen-Copolymerharze in Partikelform in Wasser dispergiert werden, mit einem Treibmittel imprägniert werden und in einen Raum mit einem niedrigeren Druck überführt werden, um die Partikel aufzuschäumen. Das Verhältnis von Copolymer zu Dispersionsmittel vor dem Schäumen beträgt höchstens 0,5. Eine Erhöhung des Phasenverhältnisses führt zum Blocken der Propylenharz-Partikel.

EP 1 016 690 A2 offenbart ebenfalls ein Verfahren zur Herstellung von vorexpandierten Partikeln, wobei das Verhältnis von aufzuschäumenden Polymeren zu Dispersionsmittel 0,05 bis 1,0 beträgt. In EP 1 016 690 wird jedoch ein ganz spezielle Polypropylen Harz-Zusammensetzung eingesetzt, welches einen Wassergehalt von 1 - 20 Gew.-% aufweist. EP 1 016 690 A2 offenbart kein Verfahren zur Herstellung von expandierten Partikeln unter Verwendung eines Treibmittels. EP 1 016 690 offenbart zudem nur ein Verfahren zur Herstellung von vorexpandierte Partikeln mit denen Schüttdichten von < ca. 30 g/l hergestellt werden.

DE 197 37 002 A1 offenbart ein Verfahren zur Herstellung von expandierten Polyolefin-Partikeln durch Imprägnieren von Polyolefin-Granulat mit einem flüchtigen Treibmittel in Suspension unter Druck und anschließendem Entspannen. Gemäß dieser Schrift ist es erfindungswesentlich, dass das verwendete Suspensionsmedium eine niedrigere Dichte aufweist als das Polyolefin-Granulat, so dass Wasser als nicht geeignet angegeben ist. Des Weiteren werden anorganische Treibmittel wie Stickstoff, Luft, Ammoniak und Kohlendioxid offenbart.

US 4,704,239 offenbart ein Verfahren zur Herstellung von expandierten Partikeln aus einem polymeren Material, wobei nicht expandierte Partikel mit einem Stickstoff enthaltenden, anorganischen Gas in Kontakt gebracht werden.

US 5,561,170 offenbart ein Verfahren zur Herstellung von expandierbaren, thermoplastischen Polymeren. Wasser ist als Suspendiermedium offenbart, des Weiteren werden organische Verbindungen wie C₃-C₉-Kohlenwasserstoffe oder Kohlenstoffdioxid als Treibmittel offenbart.

Das Abstract der japanischen Veröffentlichung JP 2009 22 14 51 offenbart ein Verfahren zur Herstellung eines Polypropylen-Schaumstoff-Partikels, wobei die nicht expandierten Partikel in einem wässrigen Medium mit einem anorganischen Dispergiermittel in einem druckfesten Container vorgelegt werden, die Temperatur auf oberhalb der Glastemperatur der Partikel angehoben wird und der Inhalt in einen weiteren Reaktor mit niedrigem Druck überführt wird, so dass die Partikel aufschäumen.

Bei der Herstellung von expandierten Partikeln durch das Imprägnierverfahren besteht somit im Stand der Technik die Problematik, dass bei zunehmend hohen Schüttdichten, beispielsweise oberhalb 80 g/l, die Partikelgrößenverteilung deutlich breiter wird. Partikel mit zu unterschiedlichen Partikelgrößen würden sich im Fertigungsprozess jedoch zumindest teilweise entmischen. Des Weiteren besteht die Gefahr, dass aus expandierten Polymer-Partikeln mit einer zu breiten Partikelgrößenverteilung hergestellte Formteile erhöhte Dichteschwankungen aufweisen und eine unbefriedigende Oberflächenbeschaffenheit ergeben.

Um eine ausreichende Partikelgrößenverteilung zu erhalten, beschreibt daher die EP 1 788 013 A1 ein Verfahren, bei dem ein großer Anteil von Partikeln, die außerhalb der gewollten Partikelgröße liegen, abgesiebt werden. Dies führt jedoch zu einer Verschlechterung der spezifischen Produktleistung einer Produktionsanlage.

Ein alternatives Verfahren zur Herstellung von expandierten Partikeln wird beispielsweise in EP 1 182 225 beschrieben. Wird im Verfahren nach EP 1 182 225 das Phasenverhältnis über 0,5 erhöht, neigen die Partikel in der Aufheizphase zum Verkleben.

Aufgabe der vorliegenden Erfindung ist es somit, so genannte High-Density-Produkte, d. h. Schaumpartikel mit einer Schüttdichte oberhalb 80 g/l, herstellen zu können, die sich durch eine besonders enge Korngrößenverteilung auszeichnen. Weitere Aufgabe der Erfindung ist es, dass es gelingt, diese Herstellung im Produktionsmaßstab mit hoher spezifischer Produktleistung durchzuführen.

Gelöst wird diese Aufgabe durch das erfindungsgemäße Verfahren zur Herstellung von expandierten Partikeln enthaltend mindestens ein Polyolefin, mindestens umfassend die folgenden Schritte
(A) Herstellen einer Suspension enthaltend ein Granulat enthaltend mindestens ein Polyolefin, in Wasser,
(B) Imprägnieren des in der Suspension aus Schritt (A) enthaltenen Granulates mit mindestens einem Treibmittel, um ein mit Treibmittel beladenes Granulat in Suspension zu erhalten, und
(C) Entspannen der in Schritt (B) erhaltenen Suspension, um expandierte Partikel zu erhalten,
wobei das Phasenverhältnis von in Schritt (A) eingesetztem Granulat zu Wasser > 0,5 beträgt und als Treibmittel in Schritt (B) Stickstoff eingesetzt wird, wobei die Schüttdichte der expandierten Partikel 80 bis 300 g/l beträgt.

Die Aufgaben werden des Weiteren gelöst durch die erfindungsgemäßen expandierten Partikel bzw. durch Formteile, herstellbar aus den erfindungsgemäßen expandierten Partikeln.

Die einzelnen Schritte (A) bis (C) des erfindungsgemäßen Verfahrens werden im Folgenden detailliert beschrieben.

### Schritt (A):

Schritt (A) des erfindungsgemäßen Verfahrens umfasst das Herstellen einer Suspension enthaltend ein Granulat enthaltend mindestens ein Polyolefin, in Wasser.

Folgende Polyolefine sind besonders geeignet:
a) Homopolypropylen,
b) Randomcopolymere des Propylens mit 0,1 bis 15 Gew.-%, bevorzugt 0,5 bis 12 Gew.-%, eines Comonomeren. Bevorzugte Comonomere sind Ethylen, Styrol, Diene wie Butadien oder ein C₄₋₁₀-alpha-Olefin oder deren Mischungen. Besonders bevorzugte Randomcopolymere sind Copolymere von Propylen mit 0,5 bis 6 Gew.-% Ethylen oder mit 0,5 bis 15 Gew.-% 1-Buten, oder ein Terpolymer aus Propylen, 0,5 bis 6 Gew.-% Ethylen und 0,5 bis 6 Gew.-% 1-Buten, oder Copolymere aus Ethylen, Propylen und einem,
c) Mischungen der unter a) oder b) genannten Polymere mit 0,1 bis 75 Gew.-%, bevorzugt 3 bis 50 Gew.-% eines Polyolefin-Elastomeren, z.B. eines Ethylen-Propylen-Blockcopolymeren mit 30 bis 70 Gew.-% Propylen,
d) Polyethylene, beispielsweise LD (low density), LLD (linear low density), MD (medium density) oder HD (high density), HMW (high molecular weight) oder UHMW (ultra high molecular weight), oder
e) Mischungen der unter a) bis d) genannten Polymere, wobei gegebenenfalls Phasenvermittler mit verwendet werden, um die Phasenanbindung der in manchen Fällen unverträglichen Polymere zu verbessern.

In einer bevorzugten Ausführungsform des erfindungsgemäßen Verfahrens ist das wenigstens eine Polyolefin ein Propylen-Ethylen-Random-Copolymer, wobei der Gehalt an Ethylen besonders bevorzugt 1 bis 5 Gew.-%, bezogen auf das gesamte Copolymer, beträgt.

Geeignet sind sowohl mit Ziegler- als auch mit Metallocen-Katalysatoren hergestellte Polyolefine.

Der Kristallitschmelzpunkt (DSC-Maximum) der erfindungsgemäß einsetzbaren Polyolefine liegt im Allgemeinen zwischen 90 und 170 °C. Ihre Schmelzwärme, bestimmt nach der DSC-Methode, liegt vorzugsweise zwischen 20 und 300 J/g, der Schmelzindex MFI (230 °C, 2,16 kp für Propylenpolymerisate und 190 °C, 2,16 kp für Ethylenpolymerisate) nach DIN 53 735 liegt bei 0,1 bis 100 g/10 min.

Die Polyolefine können mit bis zu 50 Gew.-% eines andersartigen Thermoplasts mit einer Glastemperatur (DSC-Wendepunkt) unterhalb von 180 °C abgemischt sein. Geeignete Thermoplasten sind z. B. Polyamide in Mengen von 5 bis 40 Gew.-%, wobei der Mischung übliche Phasenvermittler, z. B. Blockcopolymerisate, wie Exxelor^{®} P 1015 (Fa. EXXON), zugesetzt werden können.

Es hat sich gezeigt, dass die Erfindung bevorzugt ohne Zumischen eines artfremden Thermoplasts durchgeführt wird. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

In Schritt (A) des erfindungsgemäßen Verfahrens wird das Polyolefin in Form eines Granulates eingesetzt. Dieses Polyolefingranulat weist vorzugsweise mittlere Durchmesser von 0,2 bis 10 mm, insbesondere von 0,5 bis 5 mm auf. Dieses bevorzugt zylinderförmige oder runde Granulat kann durch alle dem Fachmann bekannte Verfahren hergestellt werden, insbesondere durch Extrudieren des Polyolefins, gegebenenfalls zusammen mit dem zu zumischenden Thermoplasten und weiteren Zusatzstoffen, Auspressen aus dem Extruder, gegebenenfalls Abkühlen und Granulieren. Ein solches bevorzugt in Schritt (A) eingesetztes Granulat wird auch "Minigranulat" genannt.

Das in Schritt (A) des erfindungsgemäßen Verfahrens bevorzugt eingesetzte Granulat enthält vorzugsweise 0,001 bis 10,0 Gew.-%, besonders bevorzugt 0,01 bis 1,0 Gew.-%, ganz besonders bevorzugt 0,02 bis 0,06 Gew.-% beispielsweise 0,04 bis 0,06 Gew.-%, bezogen auf das Granulat, wenigstens eines Nukleierungsmittels. Geeignet sind z. B. Talkum, Paraffine und/oder Wachse sowie Ruß, Graphit und pyrogene Kieselsäuren, ferner natürliche oder synthetische Zeolithe und, gegebenenfalls modifizierte, Bentonite, besonders bevorzugt Talkum. Sie bewirken, dass ein feinzelliger Schaum entsteht, in manchen Fällen ermöglichen sie überhaupt erst das Schäumen. Das in Schritt (A) bevorzugt eingesetzte Granulat kann des Weiteren übliche Zusatzstoffe enthalten, wie Antioxidantien, Stabilisatoren, Flammschutzmittel, Wachse, Füllstoffe, Pigmente und Farbstoffe. Geeignete Additive sind dem Fachmann an sich bekannt und beispielsweise in EP 1 514 896 A1 genannt.

Das Granulat enthaltend mindestens ein Polyolefin wird in Schritt (A) des erfindungsgemäßen Verfahrens in Wasser suspendiert.

Die Menge an Wasser in der Suspension wird im Allgemeinen so gewählt, dass das Phasenverhältnis von in Schritt (A) eingesetztem Granulat zu Wasser > 0,5, bevorzugt > 0,58, beträgt. Das Phasenverhältnis von in Schritt (A) eingesetztem Granulat zu Wasser beträgt im Allgemeinen < 1,50, bevorzugt < 0,90, besonders bevorzugt < 0,80, insbesondere < 0,70.

Das erfindungsgemäße Phasenverhältnis betrifft das Verhältnis von Granulat, gemessen in Kilogramm, zu Wasser, ebenfalls in Kilogramm. Dem Fachmann ist bekannt, wie das erfindungsgemäße Verhältnis eingestellt werden kann, beispielsweise beträgt bei 500 kg Granulat in 1000 kg Wasser das Phasenverhältnis Granulat zu Wasser 0,5.

Die Menge an Granulat enthaltend mindestens ein Polyolefin, welches in die Suspension gemäß Schritt (A) eingebracht wird, ergibt sich aus dem oben beschriebenen Phasenverhältnis von Granulat zu Wasser.

Durch das spezielle Phasenverhältnis von Wasser zu Granulat, welches in Schritt (A) des erfindungsgemäßen Verfahrens eingestellt wird, gelingt es, expandierte Partikel herstellen zu können, welche sich durch eine besonders enge Teilchengrößenverteilung auszeichnen.

Bevorzugt wird das Granulat enthaltend mindestens ein Polyolefin in einem Rührreaktor in Wasser suspendiert. Dabei werden bevorzugt Suspendierhilfsmittel zugesetzt, um eine gleichmäßige Verteilung des Granulates im Wasser zu gewährleisten. Geeignete Suspendierhilfsmittel sind wasserunlösliche anorganische Stabilisatoren, wie Tricalciumphosphat, Magnesiumpyrophosphat, Metallcarbonate, ferner Polyvinylalkohol und Tenside, wie Natriumdodecyl-arylsulfonat. Diese Suspendierhilfsmittel, insbesondere die genannten wasserunlöslichen anorganischen Stabilisatoren, werden üblicherweise in Mengen von 0,005 bis 10 Gew.-%, bezogen auf die gesamte Suspension, eingesetzt. Tenside, beispielsweise Natriumdodecyl-arylsulfonat, werden üblicherweise in einer Menge von 2 bis 2000 ppm, insbesondere 2 bis 50 ppm, bezogen auf die gesamte Suspension, eingesetzt.

Schritt (A) des erfindungsgemäßen Verfahrens kann bei allen geeigneten Temperaturen durchgeführt werden. Diese Temperaturen sind dem Fachmann bekannt, beispielsweise wird Schritt (A) des erfindungsgemäßen Verfahrens im Allgemeinen bei einer Temperatur durchgeführt, bei der das verwendete Suspendiermedium flüssig ist, beispielsweise bei einer Temperatur von 15 bis 35 °C, besonders bevorzugt bei Umgebungstemperatur.

### Schritt (B):

Schritt (B) des erfindungsgemäßen Verfahrens umfasst das Imprägnieren des in der Suspension aus Schritt (A) enthaltenen Granulates mit mindestens einem Treibmittel, um ein mit Treibmittel beladenes Granulat in Suspension zu erhalten.

In Schritt (B) des erfindungsgemäßen Verfahrens wird beispielsweise absatzweise in einem Imprägnierbehälter, z.B. in einem Rührkesselreaktor gearbeitet. In dem Reaktor, bevorzugt in einem Imprägnierkessel, liegt im Allgemeinen die Suspension aus Schritt (A) des erfindungsgemäßen Verfahrens vor, enthaltend das mindestens eine Polyolefin, bevorzugt als Minigranulat, in Wasser als Suspendiermedium, sowie gegebenenfalls ein Suspendierhilfsmittel. Zu dieser Suspension wird nun bevorzugt mindestens ein Treibmittel zudosiert.

In dem erfindungsgemäßen Verfahren wird Stickstoff als Treibmittel eingesetzt.

Gerade die erfindungsgemäß bevorzugte Kombination von Stickstoff als Treibmittel und dem beschriebenen Phasenverhältnis von Granulat zu Wasser von > 0,5 führt erfindungsgemäß zu einer besonders engen Teilchengrößenverteilung.

Das mindestens eine Treibmittel wird im Allgemeinen in einer Menge von 1 bis 30 Gew.-%, bevorzugt 1 bis 20 Gew.-%, besonders bevorzugt 2 bis 15 Gew.-%, jeweils bezogen auf das Granulat, eingesetzt. Es kann auf einmal oder in Teilportionen zugeführt werden.

Der Reaktorinhalt wird im Allgemeinen auf eine Imprägniertemperatur von üblicherweise mindestens 100 °C erhitzt.

Daher betrifft die vorliegende Erfindung auch das erfindungsgemäße Verfahren, wobei der Reaktorinhalt in Schritt (B) auf eine Imprägniertemperatur von mindestens 100 °C erhitzt wird.

Die Treibmittelzugabe kann dabei vor, während oder nach dem Aufheizen des Reaktorinhalts, bevorzugt vor dem Aufheizen, erfolgen. Die Imprägniertemperatur sollte in der Nähe der Erweichungstemperatur des Polyolefins liegen, beispielsweise 40 °C unter bis 25 °C über der Schmelztemperatur (Kristallitschmelzpunkt) des Polyolefins. Bevorzugt sind, insbesondere bei Polypropylen, Imprägniertemperaturen von 110 bis 180 °C, insbesondere 130 bis 160 °C.

Im Allgemeinen kann erfindungsgemäß direkt auf die Imprägniertemperatur aufgeheizt werden und diese Temperatur bis zum Entspannungszeitpunkt gehalten werden.

Erfindungsgemäß bevorzugt wird jedoch in den letzten 10 °C vor der Imprägniertemperatur bis zur Entspannung mit einer Aufheizrate von mindestens 0,2 °C/min., besonders bevorzugt mindestens 0,5 °C/min und ganz besonders bevorzugt mindestens 1,0 °C/min aufgeheizt. Die Aufheizrate beträgt üblicherweise nicht mehr als 5,0 °C/min, bevorzugt nicht mehr als 3,0 °C/min.

Daher betrifft die vorliegende Erfindung bevorzugt das erfindungsgemäße Verfahren, wobei in Schritt (B) in den letzten 10 °C vor der Imprägniertemperatur bis zur Entspannung mit einer Aufheizrate von mindestens 0,2 °C/min., besonders bevorzugt mindestens 0,5 °C/min und ganz besonders bevorzugt mindestens 1,0 °C/min aufgeheizt wird. Die Aufheizrate beträgt üblicherweise nicht mehr als 5,0 °C/min, bevorzugt nicht mehr als 3,0 °C/min.

Je nach Menge des Treibmittels sowie nach der Höhe der Temperatur stellt sich im verschlossenen Reaktor ein Druck (Imprägnierdruck) ein, der im Allgemeinen 2 bis 100 bar (absolut) beträgt. Erforderlichenfalls kann man den Druck durch ein Druckregelventil oder Nachpressen von Treibmittel regulieren. Durch die bei den Imprägnierbedingungen vorliegende erhöhte Temperatur und den Überdruck diffundiert Treibmittel in die Polymergranulatpartikel hinein. Die Imprägnierdauer beträgt im Allgemeinen 0,3 bis 10 Stunden.

Nach dem erfindungsgemäßen Schritt (B) wird ein mit Treibmittel beladenes Granulat in Suspension erhalten, wobei das Phasenverhältnis von Granulat zu Suspendiermedium die oben genannten Werte aufweist.

### Schritt (C)

Schritt (C) des erfindungsgemäßen Verfahrens umfasst das Entspannen der in Schritt (B) erhaltenen Suspension aus Schritt (B), um expandierte Partikel zu erhalten.

Üblicherweise wird in Schritt (C) des erfindungsgemäßen Verfahrens die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über Atmosphärendruck liegen kann. Beispielsweise entspannt man auf einen Druck von z. B. 0,5 bis 5, insbesondere 1 bis 3 bar (absolut). Während des Entspannens kann man im Imprägnierbehälter den Imprägnierdruck konstant halten, indem man Treibmittel nachpresst. Während des Entspannens dehnt sich das in dem Granulat enthaltene Treibmittel aus, so dass expandierte Partikel erhalten werden. Somit wird nach dem Entspannen eine Suspension von expandierten Partikeln erhalten, die bevorzugt sofort erfindungsgemäß gekühlt wird.

In einer bevorzugten Ausführungsform in Schritt (C) des erfindungsgemäßen Verfahrens die Suspension nach dem Entspannen mit einem geeigneten Kühlmittel abgekühlt. Verfahren zum Abkühlen sind dem Fachmann bekannt.

Geeignete Kühlmittel sind dem Fachmann bekannt, beispielsweise Wasser, polare organische Lösungsmittel, beispielsweise Alkohole wie Methanol, Ethanol, Propanole, oder Ketone, wie Aceton, oder Mischungen davon. In einer besonders bevorzugten Ausführungsform des erfindungsgemäßen Verfahrens ist das Kühlmittel in Schritt (C) Wasser. In einer weiteren erfindungsgemäßen Ausführungsform kann in Schritt (C) als Kühlmittel auch flüssiger Stickstoff mit einer Temperatur von -196 °C, oder festes CO₂ mit einer Temperatur von -78 °C verwendet werden.

Das Abkühlen in Schritt (C) des erfindungsgemäßen Verfahrens wird bevorzugt durchgeführt, indem der Entspannungsstrahl mit einem Kühlmittel in Kontakt gebracht wird.

In einer bevorzugten Ausführungsform weist das Kühlmittel eine Temperatur von weniger als 50 °C, besonders bevorzugt weniger als 40 °C, ganz besonders weniger als 30 °C, beispielsweise 25 °C, auf. Das Kühlmittel weist im Allgemeinen eine Mindesttemperatur von wenigstens 5 °C, bevorzugt wenigstens 10 °C, auf. Bei Verwendung von flüssigen Stickstoff bzw. festem CO₂ als Kühlmittel liegen die Kühlmitteltemperaturen entsprechend niedriger.

In einer ganz besonders bevorzugten Ausführungsform umfasst Schritt (C) des erfindungsgemäßen Verfahrens das Entspannen und Abkühlen der in Schritt (B) erhaltenen Suspension durch Inkontaktbringen mit einem geeigneten Kühlmittel, um Schaumpartikel zu erhalten, wobei das Gewichtsverhältnis von Kühlmittel zu dem in Schritt (A) eingesetzten Suspendiermedium mindestens 0,3, bevorzugt mindestens 0,6, besonders bevorzugt mindestens 0,9, beträgt.

Das Gewichtsverhältnis von Kühlmittel zu dem in Schritt (A) eingesetzten Suspendiermedium beträgt in dieser Ausführungsform höchstens 20, bevorzugt höchstens 15, besonders bevorzugt höchstens 10.

Üblicherweise wird in Schritt (C) des erfindungsgemäßen Verfahrens die Suspension durch eine geeignete Vorrichtung entspannt. Bevorzugt verlässt die Suspension den Imprägnierkessel zunächst durch ein Ventil. Zur Beruhigung des Entspannungsstrahls und Ausbildung einer laminaren Strömung kann dieser anschließend bevorzugt durch ein kurzes Stück eines Entspannungsrohrs geführt werden, das am Ende eine Lochblende trägt. Durch Länge und Durchmesser des Entspannungsrohrs sowie Durchmesser der Lochblende kann die Entspannungszeit kontrolliert werden.

Das Entspannungsrohr hat üblicherweise eine Länge L von 0 bis 500 mm und einen Innendurchmesser B von 20 bis 40 mm. Der Durchmesser A der Lochblende kann zwischen 5 und 40 mm variieren. Der schematische Aufbau einer bevorzugten Vorrichtung ist in Figur 1 dargestellt.

Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der Polyolefinpartikel ausreicht, jedoch über Atmosphärendruck liegen kann. Beispielsweise entspannt man auf einen Druck von z. B. 0,5 bis 5, insbesondere 1 bis 3 bar (absolut). Während des Entspannens kann man im Imprägnierbehälter den Imprägnierdruck konstant halten, indem man Treibmittel nachpresst. Während des Entspannens dehnt sich das in dem Granulat enthaltene Treibmittel aus, so dass expandierte Partikel erhalten werden. Somit wird nach dem Entspannen eine Suspension von expandierten Partikeln erhalten.

Die eigentliche Expansion der Partikel dauert nur wenige Millisekunden. Die Partikelgeometrie wird jedoch erst eingefroren, wenn die Kristallisationstemperatur des Polymeren unterschritten wird. Bei dem in den Beispielen verwendeten Polymer liegt dieser Kristallisationspunkt beispielsweise bei ca. 106 °C (Bestimmung mittels DSC).

Es ist Stand der Technik, die Bedingungen bezüglich Temperatur und Druck innerhalb des Imprägnierkessels während der Entspannung in Schritt (C) konstant zu halten. Ziel des erfindungsgemäßen Verfahrens ist es, dass jedes einzelne Partikel auch nach dem Verlassen des Imprägnierkessels durch eine geeignete Vorrichtung ebenfalls möglichst gleiche Bedingungen bis zum Erreichen dieses Kristallisationspunktes erfährt.

Nach dem erfindungsgemäßen Abkühlen wird eine Suspension von expandierten Partikeln enthaltend mindestens ein Polyolefin, so genannte Polyolefinpartikel, erhalten. Die expandierten Partikel können in üblicher Weise aus der Suspension abgetrennt werden, beispielsweise durch Filtrieren, beispielsweise mit einem Maschen- oder Bogensieb oder über eine kontinuierlich arbeitende Zentrifuge. Des Weiteren kann gegebenenfalls vor oder nach dem Abtrennen noch anhaftendes Suspendiermittel und/oder Suspendierhilfsmittel entfernt werden. Die expandierten Polyolefinpartikel können anschließend gewaschen und getrocknet werden.

Die nach Schritt (C) des erfindungsgemäßen Verfahrens erhaltenen expandierten Polyolefinpartikel weisen eine Schüttdichte von 80 bis 300 g/l, bevorzugt von 80 bis 200 g/l, beispielsweise 90 bis 140 g/l auf.

In einer bevorzugten Ausführungsform des erfindungsgemäßen Verfahrens werden die in Schritt (C) erhaltenen expandierten Partikel (expandierte Partikel I) weiter aufgeschäumt, um expandierte Partikel II mit einer geringeren Schüttdichte zu erhalten. Dieser Schritt wird auch "Nachschäumen" genannt.

Dieser Zusatzschritt wird insbesondere angewandt, um den Transport- und Lagervorteil von Partikeln mit hohen Schüttdichten zu nutzen. Eine benötigte niedrige Schüttdichte kann dann erst bei Bedarf hergestellt werden.

Verfahren, um die in Schritt (C) des erfindungsgemäßen Verfahrens erhaltenen expandierten Partikel I weitere aufzuschäumen, sind dem Fachmann bekannt und werden beispielsweise in EP 1 533 335 B1 beschrieben.

Die Polyolefinpartikel, die in Schritt (C) erhalten werden d. h. als expandierte Polyolefinpartikel I, können gegebenenfalls vor dem Nachschäumen mit einem Antiverklebungsmittel versehen werden. Dies geschieht in einer bevorzugten Ausführungsform durch Beschichten. Typische Antiverklebungsmittel sind ebenfalls in der EP 1 533 335 B1 beschrieben.

Das Verhältnis von Schüttdichte der expandierten Partikel I zu der Schüttdichte der nachgeschäumten expandierten Partikel II, der so genannte Expandierfaktor, liegt besonders bevorzugt bei 1,2 bis 3.

Die erfindungsgemäß hergestellten expandierten Polyolefinpartikel (expandierte Partikel I oder II) weisen im Allgemeinen im Innern der Partikel eine mittlere Zellzahl von 1 bis 500 Zellen/mm², vorzugsweise 2 bis 200 Zellen/mm², insbesondere 16 bis 100 Zellen/mm², auf, jeweils bei Auswertung der inneren 75% der Projektionsfläche der Partikel.

Die expandierten Partikel I oder II sind in der Regel zumindest annähernd kugelförmig und weisen üblicherweise einen Durchmesser von 0,2 bis 20 mm, bevorzugt 0,5 bis 15 mm und insbesondere 1 bis 12 mm auf. Bei nicht kugelförmigen, z. B. länglichen oder zylinderförmigen Partikeln, ist mit Durchmesser die längste Abmessung gemeint.

Die erfindungsgemäß hergestellten expandierten Partikel zeichnen sich durch eine besonders enge Teilchengrößenverteilung aus. Die Teilchengrößenverteilung kann durch die normierte Standardabweichung der Partikelgröße NSAW beschrieben werden

Daher betrifft die vorliegende Anmeldung auch expandierte Partikel, herstellbar, bevorzugt hergestellt, durch das erfindungsgemäße Verfahren, bevorzugt enthaltend wenigstens ein Polyolefin, wobei sie eine Teilchengrößenverteilung, beschrieben durch die normierte Standardabweichung der Partikelgröße NSAW < 0,2 aufweisen

Die Polyolefinpartikel können gegebenenfalls nach dem Verschäumen, d. h. als expandierte Polyolefinpartikel I, die in Schritt (C) erhalten werden und die daraus hergestellten expandierten Polyolefinpartikel II, mit einem Antistatikum versehen werden. Dies geschieht in einer bevorzugten Ausführungsform durch Beschichten.

Aus den erfindungsgemäß hergestellten expandierten Polyolefinpartikeln I oder II kann man Schaumstoffe herstellen, beispielsweise indem man sie in einer geschlossenen Form unter Wärmeeinwirkung miteinander verschweißt. Dazu füllt man die Partikel in die Form und leitet nach Schließen der Form Wasserdampf oder Heißluft ein, wodurch die Partikel weiter expandieren und miteinander zum Schaumstoff, vorzugsweise mit einer Dichte im Bereich von 90 bis 300 g/l, besonders bevorzugt 90 bis 200 g/l, ganz besonders bevorzugt 100 bis 140 g/l, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Polyolefin-Schaumstoff, Schaumstoff-Halbzeuge und Schaumstoff-Formteile ein.

Die vorliegende Erfindung betrifft daher auch einen Schaumstoff, enthaltend expandierte Partikel, herstellbar, bevorzugt hergestellt, durch das erfindungsgemäße Verfahren. Des Weiteren betrifft die vorliegende Erfindung ein Formteil, herstellbar, bevorzugt hergestellt, aus den erfindungsgemäß herstellbaren expandierten Partikeln.

Die vorliegende Erfindung betrifft auch ein Formteil, enthaltend durch das erfindungsgemäße Verfahren herstellbare expandierte Partikel.

Die vorliegende Erfindung betrifft auch ein Verfahren zur Herstellung eines Formteils, umfassend wenigstens die Schritte
(D) Herstellen von expandierten Partikeln nach dem oben genannten erfindungsgemäßen Verfahren und
(E) Aufschäumen der Schaumpartikel aus Schritt (D) in einer entsprechenden Form, um ein Formteil zu erhalten.

Bei diesem Verfahren werden in Schritt (D) zunächst expandierte Partikel gemäß den Schritten (A), (B) und (C) wie oben beschrieben hergestellt. Optional kann auch zusätzlich aus den expandierten Partikeln I, die Partikel II durch Nachschäumen hergestellt werden. Das zu den Schritten (A), (B) und (C) Gesagte gilt daher entsprechend.

Schritt (E) des erfindungsgemäßen Verfahrens umfasst das Aufschäumen der expandierten Partikel aus Schritt (D) in einer entsprechenden Form, um ein Formteil zu erhalten.

In einer bevorzugten Ausführungsform wird Schritt (E) beispielsweise durchgeführt, indem man die in Schritt (D) erhaltenen expandierten Partikel in einer geschlossenen Form unter Wärmeeinwirkung miteinander verschweißt. Dazu füllt man die Partikel bevorzugt in die Form und leitet nach Schließen der Form Wasserdampf oder Heißluft ein, wodurch die Partikel weiter expandieren und miteinander zum Formteil, vorzugsweise mit einer Dichte im Bereich von 8 bis 300 g/l, verschweißen. Das Verhältnis der Dichte des Formteils zu der Schüttdichte der expandierten Partikel beträgt dabei im Allgemeinen > 1,1.

Die vorliegende Erfindung betrifft auch die Verwendung der erfindungsgemäß herstellbaren expandierten Partikel zur Herstellung von Formteilen.

### Testmethoden

### Laborsiebung:

Die Bestimmung der Partikelgrößenverteilung erfolgt mit einer Siebanalyse in Anlehnung an DIN 53477 bzw. DIN66165, Teil 1, Verfahren F mit einer Plansiebmaschine d.h. durch horizontale, kreisförmige Bewegung des Siebsatzes unter Verwendung von Analysensieben nach DIN ISO 33310-1.
- SMW Siebmaschenweite in mm
- Mengen der einzelnen Fraktionen auf dem Sieb in Gew.-%

### Siebgüte:

Auf einem Sieb mit definierter Maschenweite liegen im Allgemeinen, unter der Annahme von kugelförmigen Partikeln, Partikel mit einer Größe die kleiner als die Maschenweite des darüberliegenden Siebs sind, aber größer als Maschenweite das Siebs auf dem sie liegen. Die gemittelte Partikelgröße auf einem Sieb berechnet sich demnach nach Formel I.

Zur Bewertung der Siebgüte wird aus den Originaldaten der Laborsiebung (Siebfraktionen in Gew.-%) und den gemittelten Partikelgrößen PGₘ, auf einem Sieb (Formel I) der Mittelwert aller Partikelgrößen bestimmt (Formel II). Daraus errechnet sich die Standardabweichung SAW der Partikelgrößen nach Formel III und die normierte Standardabweichung nach Formel IV

| **Siebmaschenweite SMW** | **4,00** | **3,55** | **3,15** | **2,80** | **2,50** | **2,24** | **2,00** | **1,70** | **1,40** | **Boden** |
|---|---|---|---|---|---|---|---|---|---|---|
| **gemittelte Partikelgröße auf dem Sieb (PGₘ)** | | **3,78** | **3,35** | **2,98** | **2,65** | **2,37** | **2,12** | **1,85** | **1,55** | **0,7** |

(I) Gemittelte Partikelgröße PGₘ = (Maschenweite oberes Sieb + Maschenweite unteres Sieb)/2
(II) Mittelwert der Partikelgrößen = Summe (Korngröße * Häufigkeit) / 100
(III) Standardabweichung SAW der Partikelgröße = [Summe ((Partikelgröße - Mittelwert Partikelgröße)² * Häufigkeit))/100]^{1/2}
(IV) Normierte Standardabweichung NSAW der Partikelgröße = SAW/Mittelwert

### Formteilherstellung

Die Formteilherstellung erfolgt unter Produktionsbedingungen nach den beschriebenen üblichen Methoden. Besonders hohe Anforderungen an die Entformbarkeit (Verklebungsneigung) bei der Herstellung sowie Glanz und Ebenheit der Formteiloberfläche sowie an die Maßtoleranzwerden werden beispielsweise an die Produktion von Sonnenblenden (Halbschalen) gestellt.

Als Ausschuss werden hierbei alle Formteile gewertet, die nicht alle Anforderungen gleichzeitig erfüllen:
- Verklebungsneigung gering
- Glanz +
- Maßtoleranz (Länge und Breite des Formteils) < 0,2 %

### Verklebungsneigung

Bei filigraneren Formteilen, wie z.B. Sonnenblenden (Halbschalen) wird die Verklebungsneigung visuell beurteilt.
- hoch: beim Entformunmgsvorgang bleiben mehr als 20 % der Formteile in der Form hängen
- gering: beim Entformungsvorgang bleiben weniger als 2 % der Formteile in der Form hängen

### Glanzgrad

Der Glanzgrad korreliert direkt mit der Ebenheit der Oberfläche des Formteils. Er wird visuell beurteilt.
- **⊝**: extrem raue, matte Oberfläche, geringer Glanz
- **ο**: leicht unebene Oberfläche, mittlerer Glanz
- **+**: glatte, homogene Oberfläche, hoher Glanz

### Beispiele

### Allgemeine Versuchsbeschreibung (Schritte (A)-(B)-(C)):

Das erfindungsgemäß eingesetzte Basispolymer ist ein Propylen-Ethylen-Copolymer mit einem MFI (230 °C; 2,16kp) von 8 g/10 min und einem Schmelzpunkt, von 146 °C, gemessen durch DSC nach ISO 11357/3 mit einer Aufheizrate von 10 °C/min, 2. Lauf.

100 Gewichtsteile (530 kg) des Propylen-Ethylen-Random-Copolymer-Granulats (Minigranulat) mit einem Partikelgewicht von ca. 1 mg, Wasser der entsprechenden Menge des Phasenverhältnisses P, (z. B. 200 Gewichtsteile entspricht P = 0,50), 0,3 Gewichtsteile Tricalciumphosphat, 0,02 Gewichtsteile oberflächenaktiver Substanz (Na-Alkylsulfonat), N₂ und Butan nach Angabe, werden unter Rühren mit 150 Umdrehung pro Minute auf die Entspannungstemperatur aufgeheizt und anschließend entspannt.

### Vergleichsbeispiel 1 (VB1)

Gemäß allgemeiner Versuchsbeschreibung, mit 2,7 Gew.-% Butan (bezogen auf die eingesetzte Menge Minigranulat) und 16 bar N₂, P = 0,55, Entspannungstemperatur 149,0°C, Schüttdichte 97 g/l.

### Vergleichsbeispiel 2 (VB2)

Gemäß allgemeiner Versuchsbeschreibung, mit 0,6 Gew.-% Butan (bezogen auf die eingesetzte Menge Minigranulat) und 15 bar N₂, P = 0,46, Entspannungstemperatur 153,2°C, Schüttdichte 99 g/l.

### Erfindungsgemäßes Beispiel 3 (B3)

Gemäß allgemeiner Versuchsbeschreibung, ohne Butan als Treibmittel, mit 17 bar N₂, P = 0,60, Entspannungstemperatur 153,0°C, Schüttdichte 95 g/l.

Von Vergleichsbeispiel 1 und 2 und dem Beispiel 3 wird jeweils die Korngrößenverteilung mit den in Tabelle 1 angegebenen Siebmaschenweiten (SMW, in mm) gemessen.

**Tabelle 1a:**

| Siebanalyse (Laborsiebung) von Vergleichsbeispiel 1 und 2 und Beispiel 3, Mengen der einzelnen Fraktionen auf dem Sieb in Gew.-% | | | | | | | | | | |
|---|---|---|---|---|---|---|---|---|---|---|
| **SMW** | **4,00** | **3,55** | **3,15** | **2,80** | **2,50** | **2,24** | **2,00** | **1,70** | **1,40** | **Boden** |
| **VB1** | 0,0 | 0,0 | 2,9 | 9,4 | 24,2 | 25,2 | 18,1 | 15,6 | 4,5 | 0,1 |
| **VB2** | 0,0 | 0,1 | 0,2 | 2,2 | 40,1 | 27,3 | 13,2 | 12,3 | 4,6 | 0,0 |
| **B3** | 0,0 | 0,0 | 0,2 | 0,7 | 5,1 | 52,8 | 24,2 | 14,2 | 2,8 | 0,0 |

**Tabelle 1b:**

| Berechnung des Mittelwerts (MW) der Partikelgröße | | | | | | | | | | | |
|---|---|---|---|---|---|---|---|---|---|---|---|
| **PGₘ** | **3,78** | **3,35** | **2,98** | **2,65** | **2,37** | **2,12** | **1,85** | **1,55** | **0,70** | Σ | Mittelwert MW |
| | (Partikelgröße x Häufigkeit) | | | | | | | | | | |
| **VB1** | 0,00 | 9,72 | 28,01 | 64,13 | 59,72 | 38,37 | 28,86 | 6,98 | 0,07 | 235,81 | 2,36 |
| **VB2** | 0,38 | 0,67 | 6,56 | 106,27 | 64,70 | 27,98 | 22,76 | 7,13 | 0,00 | 236,43 | 2,36 |
| **B3** | 0,00 | 0,67 | 2,09 | 13,52 | 125,14 | 51,30 | 26,27 | 4,34 | 0,00 | 223,32 | 2,23 |

**Tabelle 1c:**

| Berechnung der Standardabweichung der Partikelgrößen | | | | | | | | | | | |
|---|---|---|---|---|---|---|---|---|---|---|---|
| | | | | | | | | | | SAW | NSAW |
| **KG**ₘ | **3,78** | **3,35** | **2,98** | **2,65** | **2,37** | **2,12** | **1,85** | **1,55** | **0,70** | | |
| **VB1** | 0,00 | 9,56 | 10,64 | 5,46 | 0,01 | 2,18 | 7,45 | 4,55 | 0,19 | 0,63 | 0,27 |
| **VB2** | 0,75 | 0,65 | 2,44 | 8,68 | 0,00 | 1,67 | 6,02 | 4,73 | 0,00 | 0,50 | 0,21 |
| **B3** | 0,00 | 0,84 | 1,15 | 2,35 | 2,34 | 0,66 | 3,86 | 2,03 | 0,00 | 0,36 | 0,16 |

**Tabelle 1d:**

| Formteilherstellung | |
|---|---|
| **Beispiel** | **Ausschussformteile [Gew.-%]** |
| **VB2** | 5 |
| **B3** | 2 |

Die engere Teilchengrößenverteilung der erfindungsgemäß hergestellten Partikeln, die bereits aus den Original-Siebdaten ersichtlich wird (Tabelle 1 a) wird zusätzlich durch die SAW und NSAW (Tabelle 1 c) belegt. Bei der Formteilherstellung mit den erfindungsgemäß hergestellten Partikeln, werden dadurch auch weniger Ausschussformteile hergestellt (Tabelle 1 d).

### Vergleichsbeispiel 4 (VB4)

Gemäß allgemeiner Versuchsbeschreibung, mit 0,6 Gew.-% Butan (bezogen auf die eingesetzte Menge Minigranulat) und 15 bar N₂, P = 0,46, Entspannungstemperatur 152,6°C, Schüttdichte 116 g/l.

### Vergleichsbeispiel 5 (VB5)

Gemäß allgemeiner Versuchsbeschreibung, ohne Butan als Treibmittel, mit 16 bar N₂, P = 0,46, Entspannungstemperatur 152,9°C, Schüttdichte 107 g/l.

### Erfindungsgemäßes Beispiel 6 (B6)

Gemäß allgemeiner Versuchsbeschreibung, ohne Butan als Treibmittel, mit 13 bar N₂, P = 0,60, Entspannungstemperatur 152,8°C, Schüttdichte 116 g/l.

### Erfindungsgemäßes Beispiel 7 (B7)

Gemäß allgemeiner Versuchsbeschreibung, ohne Butan als Treibmittel, mit 14 bar N₂, P = 0,60, Entspannungstemperatur 152,8°C, Schüttdichte 105 g/l.

Von den Vergleichsbeispielen 4 und 5 und den erfindungsgemäßen Beispielen 6 und 7 wird das Produkt im Produktionsmaßstab jeweils zwischen den Maschenweiten 1,8 mm und 2,5 mm (siehe auch Tabelle 2) abgesiebt und die dabei verbleibende Ausbeute bestimmt. Von den einzelnen Siebfraktionen wird zudem die Schüttdichte (SD) bestimmt.

**Tabelle 2:**

| Produktausbeuten (PA) des Gutproduktes; Schüttdichte (SD) in g/l, * Angabe der verwendeten Siebmaschenweiten | | | | | | |
|---|---|---|---|---|---|---|
| | **Unterkorn*,*** < 1,8 mm * | | **Produkt**, 1,8-2,5 mm * | | **Überkorn**, > 2,5 mm * | |
| | Siebabfall [Gew.-%] | SD [g/l] | PA [Gew.-%] | SD [g/l] | Siebabfall [Gew.-%] | SD [g/l] |
| **VB4** | 19 | 260 | 62 | 105 | 19 | 70 |
| **VB5** | 19 | 250 | 68 | 100 | 13 | 72 |
| **B6** | 21 | 230 | 77 | 107 | 5 | 88 |
| **B7** | 7 | 210 | 85 | 95 | 8 | 78 |

### Erfindungsgemäßes Beispiel 8 (B8)

Gemäß allgemeiner Versuchsbeschreibung, ohne Butan als Treibmittel, mit 12 bar N₂, P = 0,62, Entspannungstemperatur 152,7°C Mit den angegebenen Produktionsparametern werden 6 Chargen hergestellt und in einem Silo homogenisiert. Die durchschnittliche Schüttdichte beträgt 130 g/l.

Von dem erfindungsgemäßen Beispiel 8 wird jeweils Produkt zwischen den Maschenweiten 1,7 mm und 2,5 mm im Produktionsmaßstab abgesiebt, d.h. grob von Unterkorn und Überkorn abgetrennt. Von dieser Hauptausbeute wird die Partikelgrößenverteilung mit den in Tabelle 3 angegebenen Siebmaschenweiten mit einer Laborsiebung bestimmt.

**Tabelle 3a:**

| Siebanalysen von Mischchargen, Siebmaschenweiten (SMW) in mm | | | | | | | | | | |
|---|---|---|---|---|---|---|---|---|---|---|
| **SMW** | **4,00** | **3,55** | **3,15** | **2,80** | **2,50** | **2,24** | **2,00** | **1,70** | **1,40** | **Boden** |
| **B8** | 0,0 | 0,0 | 0,0 | 0,0 | 0,4 | 10,4 | 71,5 | 17,6 | 0,0 | 0,0 |

**Tabelle 3b:**

| Berechnung des Mittelwerts (MW) der Partikelgrößen | | | | | | | | | | | |
|---|---|---|---|---|---|---|---|---|---|---|---|
| | | | | | | | | | | Σ | MW |
| **PGₘ** | **3,78** | **3,35** | **2,98** | **2,65** | **2,37** | **2,12** | **1,85** | **1,55** | **0,70** | | |
| **B9** | 0,00 | 0,00 | 0,30 | 1,06 | 12,65 | 151,58 | 32,56 | 0,00 | 0,00 | 210,15 | 2,10 |

**Tabelle 3c:**

| Berechnung der Standardabweichung der Partikelgrößen | | | | | | | | | | | |
|---|---|---|---|---|---|---|---|---|---|---|---|
| | | | | | | | | | | SAW | NSAW |
| **PGₘ** | **3,78** | **3,35** | **2,98** | **2,65** | **2,37** | **2,12** | **1,85** | **1,55** | **0,70** | | |
| **B9** | 0,00 | 0,00 | 0,23 | 0,32 | 1,78 | 0,05 | 2,06 | 0,00 | 0,00 | 0,21 | 0,10 |

Durch die verfahrenstechnisch bedingten Schwankungen, verbreitert sich im Allgemeinen die Partikelgrößenverteilung von Mischchargen. Dennoch besitzt die Mischcharge aus erfindungsgemäß hergestellten Partikeln, eine engere Partikelgrößenverteilung als die Vergleichsbeispiel1 VB1 und VB2 (geringere NSAW; Tabelle 1c bzw. 3 c).

## Patentansprüche

1. Verfahren zur Herstellung von expandierten Partikeln enthaltend mindestens ein Polyolefin, mindestens umfassend die folgenden Schritte
(A) Herstellen einer Suspension enthaltend ein Granulat enthaltend mindestens ein Polyolefin, in Wasser,
(B) Imprägnieren des in der Suspension aus Schritt (A) enthaltenen Granulates mit mindestens einem Treibmittel, um ein mit Treibmittel beladenes Granulat in Suspension zu erhalten, und
(C) Entspannen der in Schritt (B) erhaltenen Suspension, um expandierte Partikel zu erhalten,
**dadurch gekennzeichnet, dass** das Phasenverhältnis von in Schritt (A) eingesetztem Granulat zu Wasser >0,5 beträgt und als Treibmittel in Schritt (B) Stickstoff eingesetzt wird, wobei die Schüttdichte der expandierten Partikel 80 bis 300 g/l beträgt.

2. Verfahren nach Anspruch 1, **dadurch gekennzeichnet, dass** das wenigstens ein Polyolefin ein Propylen-Ethylen-Random-Copolymer ist.

3. Verfahren nach Anspruch 1 oder 2, **dadurch gekennzeichnet, dass** der Reaktorinhalt in Schritt (B) auf eine Imprägniertemperatur von mindestens 100 °C erhitzt wird.

4. Verfahren nach Anspruch 3, **dadurch gekennzeichnet, dass** in Schritt (B) in den letzten 10 °C vor der Imprägniertemperatur bis zur Entspannung mit einer Aufheizrate von mindestens 0,2 °C/min. aufgeheizt wird.

5. Expandierte Partikel, herstellbar durch das Verfahren gemäß einem der Ansprüche 1 bis 3.

6. Schaumstoff, enthaltend expandierte Partikel gemäß Anspruch 5.

7. Formteil, herstellbar aus den expandierten Partikeln nach Anspruch 5.

8. Formteil, enthaltend expandierte Partikel gemäß Anspruch 5.

9. Verfahren zur Herstellung eines Formteils, umfassend wenigstens die Schritte
(D) Herstellen von expandierten Partikeln nach dem Verfahren gemäß den Ansprüchen 1 bis 4 und
(E) Aufschäumen der expandierten Partikel aus Schritt (D) in einer entsprechenden Form, um ein Formteil zu erhalten.

10. Verwendung der expandierten Partikel gemäß Anspruch 5 zur Herstellung von Formteilen.

## Claims

1. A process for producing expanded particles comprising at least one polyolefin, which comprises at least the steps
(A) production of a suspension comprising a pelletized material comprising at least one polyolefin in water,
(B) impregnation of the pelletized material comprised in the suspension from step (A) with at least one blowing agent in order to obtain a pelletized material loaded with blowing agent in suspension, and
(C) depressurization of the suspension obtained in step (B) in order to obtain expanded particles,
wherein the phase ratio of pelletized material used in step (A) to water is >0.5 and nitrogen is used as blowing agent in step (B), where the bulk density of the expanded particles is from 80 to 300 g/l.

2. The process according to claim 1, wherein the at least one polyolefin is a random propylene-ethylene copolymer.

3. The process according to claim 1 or 2, wherein the contents of the reactor in step (B) are heated to an impregnation temperature of at least 100°C.

4. The process according to claim 3, wherein, in step (B), heating is carried out at a heating rate of at least 0.2°C/min over the last 10°C before the impregnation temperature up to depressurization.

5. An expanded particle which can be produced by the process according to any of claims 1 to 3.

6. A foam comprising expanded particles according to claim 5.

7. A molding which can be produced from the expanded particles according to claim 5.

8. A molding comprising expanded particles according to claim 5.

9. A process for producing a molding, which comprises at least the steps
(D) production of expanded particles by the process according to claims 1 to 4 and
(E) foaming of the expanded particles from step (D) in an appropriate mold to give a molding.

10. The use of the expanded particles according to claim 5 for producing moldings.

## Revendications

1. Procédé pour la préparation de particules expansées contenant au moins une polyoléfine, comprenant au moins les étapes suivantes consistant à
(A) préparer une suspension, contenant un granulat contenant au moins une polyoléfine, dans de l'eau
(B) imprégner le granulat contenu dans la suspension de l'étape (A) par au moins un agent gonflant, pour obtenir un granulat chargé en agent gonflant en suspension, et
(C) détendre la suspension obtenue dans l'étape (B) pour obtenir des particules expansées,
**caractérisé en ce que** le rapport des phases du granulat utilisé dans l'étape (A) à l'eau est > 0,5 et on utilise, comme agent gonflant dans l'étape (B), de l'azote, la densité apparente des particules expansées valant 80 à 300 g/l.

2. Procédé selon la revendication 1, **caractérisé en ce que** ladite au moins une polyoléfine est un copolymère statistique de propylène-éthylène.

3. Procédé selon la revendication 1 ou 2, **caractérisé en ce que** le contenu du réacteur dans l'étape (B) est chauffé à une température d'imprégnation d'au moins 100°C.

4. Procédé selon la revendication 3, **caractérisé en ce que**, dans l'étape (B), au cours des derniers 10°C avant la température d'imprégnation jusqu'à la détente, on chauffe à une vitesse de chauffage d'au moins 0,2°C/min.

5. Particules expansées, pouvant être préparées par le procédé selon l'une quelconque des revendications 1 à 3.

6. Mousse, contenant des particules expansées selon la revendication 5.

7. Pièce moulée, pouvant être préparée à partir des particules expansées selon la revendication 5.

8. Pièce moulée, contenant des particules expansées selon la revendication 5.

9. Procédé pour la fabrication d'une pièce moulée, comprenant au moins les étapes consistant à
(D) préparer des particules expansées selon le procédé selon les revendications 1 à 4 et
(E) faire mousser les particules expansées de l'étape (D) dans un moule correspondant pour obtenir une pièce moulée.

10. Utilisation des particules expansées selon la revendication 5 pour la fabrication de pièces moulées.
